# EUROPEAN PATENT SPECIFICATION

(11) **EP 1 706 925 B1**
(45) Date of publication and mention of the grant of the patent: **02.05.2007**
(21) Application number: 05701763.4
(22) Date of filing: 20.01.2005
(51) Int. Cl.: H02G 3/04

(54) **CABLE INSTALLATION ACCESSORY**
KABELINSTALLATIONS-HILFSEINRICHTUNG
ACCESSOIRE D'INSTALLATION DE CABLES

(30) Priority: 23.01.2004 FI 20040096
(43) Date of publication of application: 04.10.2006
(73) Proprietor: Aker Yards Cabins Oy, 21500 Piikkiö (FI)
(72) Inventor: WACKER, Jarmo, FI-20780 Kaarina (FI)
(74) Representative: Gustafsson, Aulis Valdemar
(86) International application number: PCT/FI2005/050008
(87) International publication number: WO 2005/071810

(56) References cited:
- EP-A- 1 122 846
- DE-U- 7 525 995
- DE-U1- 8 010 670
- DE-U1- 20 217 227
- US-A- 4 276 332

## Description

### 1. Technical field

The present invention relates to a cable installation accessory, which is advantageously used for installations of cables in ship cabins.

### 2. Prior art

Ship cabins are nowadays manufactured mainly in workshops, from where they are moved as finished or semi-finished products onto the ship. Aboard ship the prefabricated cabins are mounted in place. In workshop conditions the cabins are also provided with installations of electrical, telecommunication and other cables. It is conventional to install the cables in a cable path and/or an installation pipe located on the cabin roof. Installation pipes are also used in cabin walls and furniture. A cable path is a bracket made e.g. of an alloy, on top of which bracket the cables are placed and, if required, fastened. Installation pipes are usually made of plastic, either of inflexible or flexible tube.

The installation pipes shield the cables both during and after the installation. Moreover, the pipes make it possible to replace the cables, if there is a need for that later on. The installation pipes are fixed onto a cabin wall or another base by means of clamps intended for this use. The cables are installed in the pipes by threading, which is a separate operation and may sometimes be troublesome, for instance if the installation pipe is bent into several curves.

EP A 1122846, which is considered to represent the closest prior art, describes a cable channel comprising sealing surfaces and a recess for cables. The sealing surfaces comprise an adhesive surface for adhering to a wall.

Usually the cables are installed on the outer surface of cabin wall, whereby lead-in connections into the cabin are required in the wall. Inside the cabin, at the point of the lead-in, there is for instance an electric socket or a telephone socket installed into a device box located in the lead-in. The installation pipes, in which the cables are installed on the other side of the wall, are connected to the device box.

In the manner described in the above the installation pipe mounted on the cabin wall forms a sort of a chimney, through which a possible fire inside the cabin tends to spread. The chimney effect of the installation pipe is strongest, when the installation pipe extends straight upwards from the device box. For eliminating the chimney effect it is thus common that the installation pipe, seen from the direction of the device box, makes a curve downwards before the vertical section of the pipe. The curve adds to the length of the both the installation pipe and the cable, and makes the installation more complicated.

In cable installations the portion of labour is quite large, which affects the costs as well. An object of the invention is to reduce the amount of work required by cable installations. A further embodiment of the invention is to provide a fireproof installation arrangement. The object is achieved as is described in claim 1.

### 3. Brief description of the invention

The invention is based on the idea of covering the cables by a channel, which is fixed onto a mounting base. The mounting base may be e.g. a cabin wall. Thus the cables remain in the space between the mounting base and the channel, i.e. in the recess of the channel. The mounting faces of the channel are provided with fixing tongues reducing the amount of work required in cable installation. The recess may be filled with a filling part, which keeps the cables in place and at the same time acts as a material preventing the chimney effect in case of a fire. The filling part is, for instance, of mineral wool. The middle section of the channel forms a recess for the cables.

### 4. List of drawings

In the following the invention is described in more detail with reference to the attached drawings, in which
Figure 1 shows an example of the cable installation accessory;
Figure 2 shows an example of another embodiment;
Figure 3 shows an example of the mounting member for the cable installation accessory according to the invention;
Figure 4 shows an example of the installation of the cable installation accessory on the wall seen from above; and
Figure 5 shows an example of the installation of the cable installation accessory on the wall seen from the side.

### 5. Description of the invention

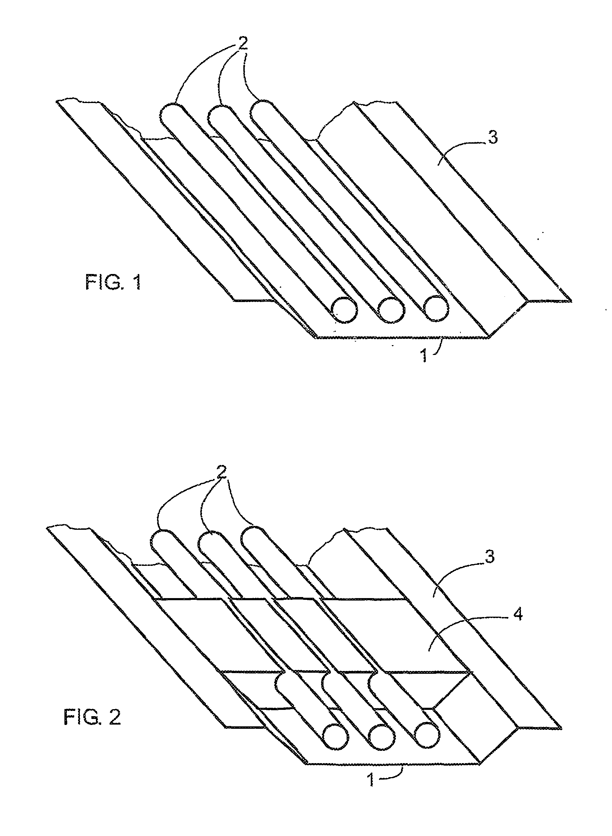

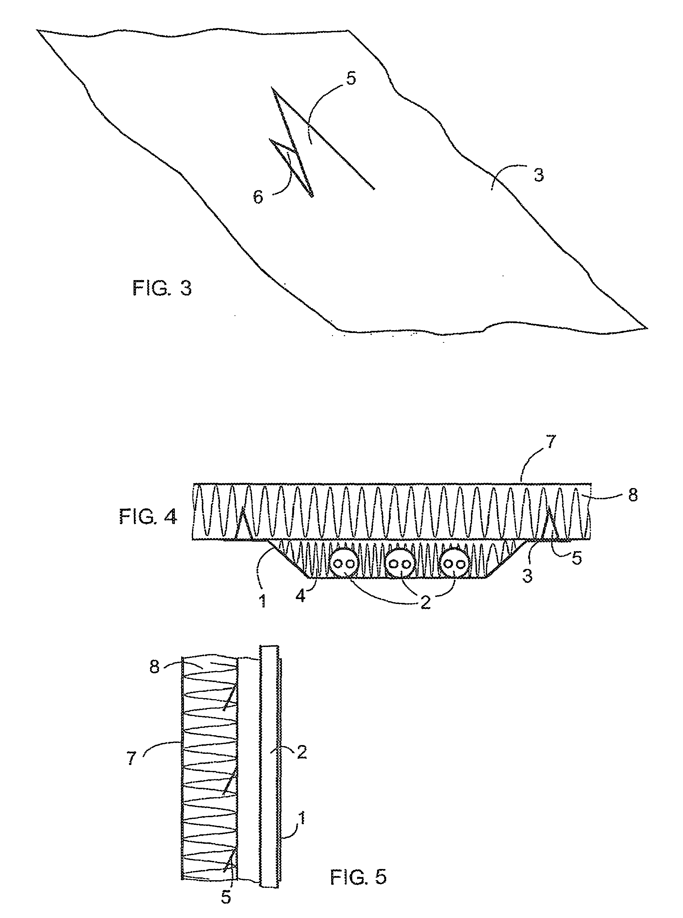

FIG. 1 shows an example of the cable installation accessory. The cable installation accessory is a channel 1, especially for installations of cables in ship cabins. The longitudinal edges of the channel provide preferably smooth mounting faces 3 for fixing the channel onto a mounting base. The mounting faces of the channel are provided with fixing tongues as illustrated in FIG. 3 according to the invention. The middle section of the channel forms a recess for the cables 2 (e.g. electric cables with two plastic sheath). When mounted in place, the channel attached to the mounting base and the part of the mounting base remaining under the channel cover the cables located in the recess.

FIG. 2 shows an example of another embodiment, where the channel comprises a filling part 4 made of resilient and non-flammable material. In the example according to the figure the filling part is one section of desired length at a certain point of the recess, but there may be several sections of desired length at certain points of the recess. The filling part may also be in the recess over the whole length of the channel.

The filling part covers the cross-sectional area of the recess and is made e.g. of mineral wool, rock material-based wool, insulating compound or ceramic material. Non-flammable material refers in this context to materials, the firing time of which is long and which can be used as fire preventing/restricting materials, in other words they are classified as non-flammable materials. The cables are placed in the filling part, whereby it acts resiliently. The filling part both supports the cables and prevents the spreading of fire along the channel. The filling part also slows down or prevents the flow of air in the channel.

In the solution according to FIG. 1 there is no filling part in the recess of the channel, but it is possible that a filling part, e.g. mineral wool, is inserted or placed in the recess of the channel, when the cables and channel are being installed. In the solution according to FIG. 2 the filling part is ready-fitted into the channel. During the installation the ends of the channel may also be blocked by inserting filling material into the ends. It is preferable to position the channel at the lead-in in the mounting base, e.g. in a cabin wall, whereby the cables coming out through the lead-in will be shielded and fixed onto the mounting base by means of the channel. The cables coming out through the lead-in need not to be bent into a curve downward, as the filling part in the recess of the channel prevents the chimney effect.

The material of the channel is also non-flammable, such as sheet metal or other metal classified as non-flammable, ceramic material, mineral-based material or other non-flammable material.

FIG. 3 shows an example of the mounting member for the cable installation accessory. The mounting member according to the figure is a protrusion 5 bent upwards from the mounting face 3 and having a sharp point. The mounting faces 3 of the channel are provided with V-shaped cuts, i.e. so-called V-cuts. The protrusion is a fixing tongue 5, which is a part of the mounting face and formed by bending the tongue upwards from the V-cut in the mounting face. After the fixing tongue has been bent upwards an opening 6 having the shape of the cut remains in the mounting face. The V-cut makes the fixing tongue triangular, whereby the sharp point of the cut is the sharp angle in the triangle of the fixing member, which sharp angle is not in contact with the mounting face. The other triangle angles remain in contact with the mounting face.

The fixing tongues of the mounting faces may also have other shapes, whereby the overall shape of the tongue and/or the shape of the sharp point vary. The fixing tongue may also be a separate part, which is fixed onto the mounting face 3 for instance by welding or glueing.

FIG. 4 shows an example of the installation of the cable installation accessory on the wall seen from above. At the same time the figure also shows the installation of the cables. In this case the wall 7 comprises insulating material 8, onto which the channel is fixed by fixing members. Since the fixing members are fixing tongues 5, no separate tools are required for fixing the installation channel and cables on the wall, but the installation may be carried out with bare hands. The figure shows also clearly how the filling part covers the cross-sectional area of the recess. Thus, the cables remain in the recess of the channel, i.e. between the channel and the wall. It is to be noted that when fixing tongues are used there is no reason to use a covering panel on the installation surface of the wall, e.g. a cabin wall, whereby the insulating material remains visible.

FIG. 5 shows a side view of an example of the installation of the cable installation accessory on the wall. The figure shows clearly how the fixing tongues 5 penetrate the insulation material of the wall so that the sharp point of the fixing tongue is slanting downwards.

The invention enables pipeless installation of cables without the cables lacking an enclosing sheath. The installation of cables is faster and requires thus less work than the use of installation pipes. The cables need not to be threaded into the installation pipes and the installations pipes need not to be fixed onto the mounting base. Nor is it necessary to bend the cables into curves at the lead-in points. The channel provides also a possibility to replace the cables afterwards. Since the shielding effect of the mounting base is utilised, no separate bottom strip is required in the installation, as the covering channel is sufficient. In the manufacture of the cable installation accessory it is advantageous to use materials classified as non-flammable, such as sheet metal and when necessary, mineral wool.

In the light of the above examples it is apparent that the embodiment according to the invention may be provided by applying a plurality of different arrangements. The shape of the channel, the size of the recess of the channel and the length of the channel may vary. It is apparent that the invention is not limited only to the examples mentioned in this disclosure, but it may have a plurality of various embodiments within the scope of the inventive idea.

## Claims

1. A cable installation accessory, especially for installations of cables (2) in ship cabins, comprising a channel (1), the longitudinal edges of which provide mounting faces (3) for fixing the channel (1) onto a mounting base (7) and the middle section of which forms a recess for cables (2), **characterised in that** the mounting faces (3) are provided with fixing tongues (5), whereby, when mounted in place, the channel (1) attached to the mounting base (7) and the part of the mounting base remaining under the channel (1) shield the cables (2) located in the recess.

2. An accessory according to claim 2, **characterised in that** a fixing tongue (5) has a sharp point.

3. An accessory according to claim 2, **characterised in that** the fixing tongue (5) is triangular, whereby the sharp point makes one angle of the triangle and is not in contact with the mounting face (3), whereas the other angles of the triangle are in contact with the mounting face (3).

4. An accessory according to claim 3, **characterised in that** the fixing tongue (5) is a part of the mounting face (3) and is formed by bending the tongue upwards from the V-cut in the mounting face.

5. An accessory according to any one of claims 1 - 4, **characterised in that** the channel (1) comprises a filling part (4) made of resilient and non-flammable material and located in the recess so that the filling part (4) covers the cross-sectional area of the recess.

6. An accessory according to claim 5, **characterised in that** the filling part (4) extends in the recess over the whole length of the channel (1).

7. An accessory according to claim 5, **characterised in that** the filling part (4) is a section of desired length at a certain point of the recess.

8. An accessory according to claim 7, **characterised in that** there are at least two sections of desired length at certain points of the recess.

9. An accessory according to any one of claims 5-8, **characterised in that** the filling part (4) is made of mineral wool, rock material-based wool or ceramic material.

10. An accessory according to any one of claims 1 - 10, **characterised in that** the channel (1) is made of non-flammable material, such as sheet metal, ceramic material or other non-flammable material.

## Patentansprüche

1. Kabelinstallations-Zubehör, insbesondere für Installationen von Kabeln (2) in Schiffskabinen, aufweisend einen Kanal (1), dessen Längsränder Montageflächen (3) zum Befestigen des Kanals (1) auf einer Montagebasis (7) bilden, und dessen mittlerer Abschnitt eine Vertiefung für Kabel (2) bildet,
**dadurch gekennzeichnet, dass** die Montageflächen mit Montagelaschen (5) versehen sind, wobei der an der Montagebasis (7) befestigte Kanal, wenn er an Ort und Stelle montiert ist, und das Teil der Montagebasis, das unter dem Kanal (1) verbleibt, die in der Vertiefung angeordneten Kabel (2) abschirmen.

2. Zubehör nach Anspruch 1, **dadurch gekennzeichnet, dass** eine Montagelasche (5) eine scharfe Spitze hat.

3. Zubehör nach Anspruch 2,
**dadurch gekennzeichnete, dass** die Montagelasche (5) dreieckig ist, wobei die scharfe Spitze einen Winkel des Dreiecks bildet und mit der Montagefläche (3) nicht in Kontakt ist, wohingegen die anderen Winkel des Dreiecks mit der Montagefläche (3) in Kontakt stehen.

4. Zubehör nach Anspruch 3,
**dadurch gekennzeichnet, dass** die Montagelasche (5) ein Teil der Montagefläche (3) ist und gebildet ist, indem die Lasche aus dem V-Schnitt in der Montagefläche nach oben gebogen ist.

5. Zubehör nach einem der Ansprüche 1-4,
**dadurch gekennzeichnet, dass** der Kanal (1) ein Füllteil (4) aufweist, das aus einem verformbaren und nicht-entflammbaren Material gefertigt ist und in der Vertiefung angeordnet ist, so dass das Füllteil (4) den Querschnittsbereich der Vertiefung überdeckt.

6. Zubehör nach Anspruch 5,
**dadurch gekennzeichnet, dass** sich das Füllteil (4) in der Vertiefung über die gesamte Länge des Kanals (1) erstreckt.

7. Zubehör nach Anspruch 5,
**dadurch gekennzeichnet, dass** das Füllteil (4) ein Abschnitt mit gewünschter Länge an einem bestimmten Punkt der Vertiefung ist.

8. Zubehör nach Anspruch 7,
**dadurch gekennzeichnet, dass** mindestens zwei Abschnitte gewünschter Länge an verschiedenen Punkten der Vertiefung vorliegen.

9. Zubehör nach einem der Ansprüche 5 - 8,
**dadurch gekennzeichnet, dass** das Füllteil (4) aus Mineralwolle, aus auf Steinwolle basierendem Material oder aus einem Keramikmaterial gefertigt ist.

10. Zubehör nach einem der Ansprüche 1-10,
**dadurch gekennzeichnet, dass** der Kanal (1) aus einem nicht-entflammbaren Material ist, wie beispielsweise aus Walzblech, aus keramischem Material oder einem anderen nicht-entflammbaren Material.

## Revendications

1. Accessoire d'installation de câbles, en particulier pour des installations de câbles (2) dans des cabines de bateau, comprenant: un canal (1), dont les bords longitudinaux fournissent des faces de montage (3) pour fixer le canal (1) sur une base de montage (7) et dont la section intermédiaire forme un évidement pour des câbles (2), **caractérisé en ce que** les faces de montage (3) sont prévues avec des languettes de fixation (5), moyennant quoi, lorsqu'il est monté en place, le canal (1) lié à la base de montage (7) et la partie de la base de montage restant sous le canal (1) protègent les câbles (2) situés dans l'évidement.

2. Accessoire selon la revendication 2, **caractérisé en ce qu'**une languette de fixation (5) a une pointe affûtée.

3. Accessoire selon la revendication 2, **caractérisé en ce que** la languette de fixation (5) est triangulaire, moyennant quoi le point affûté compose un angle du triangle et n'est pas en contact avec la face de montage (3), tandis que les autres angles du triangle sont en contact avec la face de montage (3).

4. Accessoire selon la revendication 3, **caractérisé en ce que** la languette de fixation (5) fait partie de la face de montage (3) et est formée en pliant la languette vers le haut, à partir de l'entaille en V dans la face de montage.

5. Accessoire selon l'une quelconque des revendications 1 à 4, **caractérisé en ce que** le canal (1) comprend une partie de remplissage (4) faite d'un matériau résilient et ininflammable et situé dans l'évidement, de sorte que la partie de remplissage (4) couvre l'aire en coupe transversale de l'évidement.

6. Accessoire selon la revendication 5, **caractérisé en ce que** la partie de remplissage (4) s'étend dans l'évidement sur la totalité de la longueur du canal (1).

7. Accessoire selon la revendication 5, **caractérisé en ce que** la partie de remplissage (4) est une section d'une longueur souhaitée au niveau d'un certain point de l'évidement.

8. Accessoire selon la revendication 7, **caractérisé en ce qu'**on trouve au moins deux sections de longueur souhaitées au niveau de certains points de l'évidement.

9. Accessoire selon l'une quelconque des revendications 5 à 8, **caractérisé en ce que** la partie de remplissage (4) est faite de laine minérale, de laine à base d'un matériau de roche, ou de céramique.

10. Accessoire selon l'une quelconque des revendications 1 à 10, **caractérisé en ce que** le canal (1) est fait d'un matériau ininflammable, tel que de la tôle, de la céramique ou un autre matériau ininflammable.
